# EUROPÄISCHE PATENTANMELDUNG

(11) **EP 0 955 660 A1**
(43) Veröffentlichungstag der Anmeldung: **10.11.1999**
(21) Anmeldenummer: 99810345.1
(22) Anmeldetag: 23.04.1999
(51) Int. Cl.: H01H 83/12, H01H 71/12, H02H 3/10

(54) **Elektrischer Geräteschutzschalter mit Überstrom-und Unterspannungsfunktion und Überstromsensor dafür**

(30) Priorität: 08.05.1998 CH 104198
(71) Anmelder: Schurter AG, 6002 Luzern (CH)
(72) Erfinder: Vix, Martin, 6214 Schenkon (CH)
(74) Vertreter: Hug Interlizenz AG

(57) **Zusammenfassung**

Der Geräteschutzschalter umfasst einen mechanischen Schaltkontakt (2) für einen Stromleiter (S1 - S3), ein verklinkbares Schaltschloss (6) für den Schaltkontakt (29, einen dem Stromleiter zugeordneten Überstromsensor (3), und ein elektromechanisches Unterspannungs-Relais (7) dessen Erregungsspannung von der Stromleiterspannung abgeleitet ist und welches im erregten Zustand das Schaltschloss (6) verklinkt. Der Überstromsensor (3) bewirkt bei Überstrom die Trennung des Unterspannungs-Relais (7) von seiner Erregungsspannung, die auch im Unterspannungsfall entfällt. Die Lösung der Verklinkung des Schaltschlosses (6) wird damit sowohl im Überstrom- wie im Unterspannungsfall durch dasselbe Bauteil, nämlich das Unterspannungs-Relais (7), bewirkt. Der Überstromsensor (3) wird vorzugsweise durch die Kombination eines Stromwandlers mit einer elektronischen Schaltung gebildet, welche ihrerseits bevorzugt als integrierte Schaltung ausgeführt ist. Ein besonders einfacher Stromwandler zur Erfassung des in dem Stromleiter (S1 - S3) fliessenden Stromes ergibt sich durch ein Paar induktiver Schlaufen beidseits eines Abschnittes des Stromleiters auf einer Leiterplatte, wobei zur Ausbildung eines Eisenkerns für den Stromwandler ein Paar von beidseits der Leiterplatte sich gegenüberliegend angeordneten Eisenkernhälften (K11 - K32) vorgesehen sein können.

## Beschreibung

### TECHNISCHES GEBIET

Die vorliegende Erfindung betrifft einen Schutzschalter mit Überstrom- und Unterspannungsfunktion für an das übliche Wechselspannungsnetz mit z.B. 230V/400V Netzspannung anschliessbare Geräte, wobei der Schutzschalter einen mechanischen Schaltkontakt für einen Stromleiter, einen verklinkbares Schaltschloss für den Schaltkontakt, einen dem Stromleiter zugeordneten Überstromsensor und ein elektromechanisches Unterspannungs-Relais umfasst, dessen Erregungsspannung von der Stromleiterspannung abgeleitet ist.

Der Schutzschalter kann einpolig ausgeführt sein. Vorzugsweise ist er jeoch mehrpolig, insbesondere 3-polig, ausgebildet, wobei dann entsprechend der Anzahl der Pole mehrere einzeln auf Überstrom zu überwachende Stromleiter sowie pro Stromleiter auch ein Schaltkontakt vorhanden sind. Andererseits genügt ein gemeinsames Schaltschloss auch in diesem Fall zur Bedienung aller vorhandenen Schaltontakte.

Die Erfindung betrifft auch einen Überstromsensor, wie er im Zusammenhang mit einem Geräteschutzschalter der vorgenannten Art mit Vorteil und bevorzugt eingesetzt wird.

### STAND DER TECHNIK

Geräteschutzschalter der vorgenannten Art sind in vielfältiger Ausbildung bekannt, wobei als Überstromsensor traditionell ein Bimetall verwendet wird und der Unterspannungsschutz mit dem Unterspannungs-Relais häufig in einer eigenständigen Baugruppe integriert ist.

Hinsichtlich der gattungsgemässen Geräteschutzschalter besteht das stete Bedürfnis, diese kostengünstiger zu gestalten, wobei es neben einem einfachen Aufbau aus möglichst wenig Komponenten zunehmend auf eine möglichst vollautomatische Herstellbarkeit bzw. Montierbarkeit ankommt und auch die Eichung rationell ausführbar sein muss.

### DARSTELLUNG DER ERFINDUNG

Der Geräteschutzschalter nach der Erfindung ist im Patentanspruch 1 gekennzeichnet. Er umfasst einen mechanischen Schaltkontakt für einen Stromleiter, ein verklinkbares Schaltschloss für den Schaltkontakt, einen dem Stromleiter zugeordneten Überstromsensor, und ein elektromechanisches Unterspannungs-Relais dessen Erregungsspannung von der Stromleiterspannung abgeleitet ist, wobei der Überstromsensor bei Überstrom die Trennung des Unterspannungs-Relais von seiner Erregungsspannung und der Abfall des Unterspannungs-Relais die Entklinkung des Schaltschlosses bewirkt.

Der Geräteschutzschalter nach der Erfindung zeichnet sich gegenüber den vorbekannten Ausführungen unter anderem dadurch aus, dass bei ihm die Lösung der Verklinkung des Schaltschlosses sowohl im Überstrom- wie im Unterspannungsfall durch dasselbe Bauteil, nämlich das Unterspannungs-Relais, bewirkt wird: Im Unterspannungsfall verliert das Unterspannungs-Relais auf übliche Weise seine Erregung und fällt ab; im Überstromfall wird die Erregung des Unterspannungs-Relais durch den Überstromsensor aktiv unterbrochen.

Bevorzugt ist das Unterspannungs-Relais insoweit unmittelbar zur Entklinkung des Schaltschlosses in der Lage, als sein Anker direkt als Klinke oder Klinkenhebel für das Schaltschloss ausgebildet ist.

Durch die Verwendung des Unterspannungs-Relais als aktives Element für die Entklinkung des Schaltschlosses können anstelle des üblichen Bimetalls mechanisch unbewegliche Elemente für den Aufbau des Überstromsensors mit Vorteil verwendet werden, wobei der Übertromsensor bevorzugt durch die Kombination eines Stromwandlers mit einer elektronischen Schaltung aufgebaut ist.

Ein derartiger Überstromsensor, der ebenfalls Tei der vorliegenden Erfindung bildet, ist in Anspruch 12 gekennzeichnet.

Die elektronische Schaltung bewirkt anhand des Stromwandlersignals nach einer vorgegebenen Kennlinie (z.B. einer solchen, die derjenigen eines Bimetalls nahe kommt und generell eine 1/x bzw. eine Hyperbel-Charakteristik der Zeit gegen den Strom aufweist) die erwähnte Trennung des Unterspannungs-Relais von seiner Erregungsspannung. Die elektronische Schaltung kann hierbei mit weiterem Vorteil als integrierte Schaltung in Form eines sogenannten ASIC (Application Specific Integrated Circuit) ausgeführt sein.

Ein besonders einfacher Stromwandler ergibt sich durch ein Paar induktiver Schlaufen beidseits eines Abschnittes des Stromleiters auf einer Leiterplatte, wobei zur Ausbildung eines Eisenkerns für den Stromwandler ein Paar von beidseits der Leiterplatte sich gegenüberliegend angeordneten Eisenkernhälften vorgesehen sein können. Die Leiterplatte kann hierbei gleich auch noch als Träger für die elektronische Schaltung verwendet werden.

Die Spannungsversorgung für die elektronische Schaltung lässt sich unter Verwendung eines Spannungswandlers aus der Stromleiterspannung beziehen, wobei zumindest bei Ausbildung der elektronischen Schaltung als ASIC zusätzlich ein Gleichrichter erforderlich ist. Der Spannungswandler sowie der Gleichrichter können, wie der ASIC, auf der erwähnten Leiterplatte montiert und wie dieser vollständig oder auch nur teilweise integriert ausgebildet werden.

Aus der transformierten Spannung wird in der elektronischen Schaltung bevorzugt auch noch die Erregungsspannung für das Unterspannungs-Relais gewonnen. Dieses kann dann direkt von der elektronischen Schaltung angesteuert werden und insbesondere bei Ausbildung derselben als ASIC wegen des niedrigen Spannungsniveaus (typisch 5 V) sehr klein und kompakt aufgebaut sein.

Weitere bevorzugte Ausgestaltungen und Vorteile der Erfindung ergeben sich aus der nach folgenden Beschreibung eines Ausführungsbeispiels unter Bezugnahme auf die beigefügten Zeichnungen.

### KURZE ERLÄUTERUNG DER FIGUREN

Es zeigen:
- Fig. 1: einen Geräteschutzschalter mit Überstrom- und Unterspannungsfunktion nach der Erfindung in Explosionsdarstellung;
- Fig. 2: in einer Skizze den prinzipiellen Aufbau des Schalters in dreipoliger Ausführung;
- Fig. 3: eine mögliche Auslösekurve;
- Fig. 4: in Aufsicht eine Leiterplatte mit drei Stromwandlern, einem ASIC zur Berechnung der Auslösekurve sowie einem integrierten Spannungswandler/Gleichrichter zur Spannungsversorgung des ASIC; und
- Fig. 5: die Platine von Fig. 4 im Schnitt (I-I).

### WEGE ZUR AUSFÜHRUNG DER ERFINDUNG

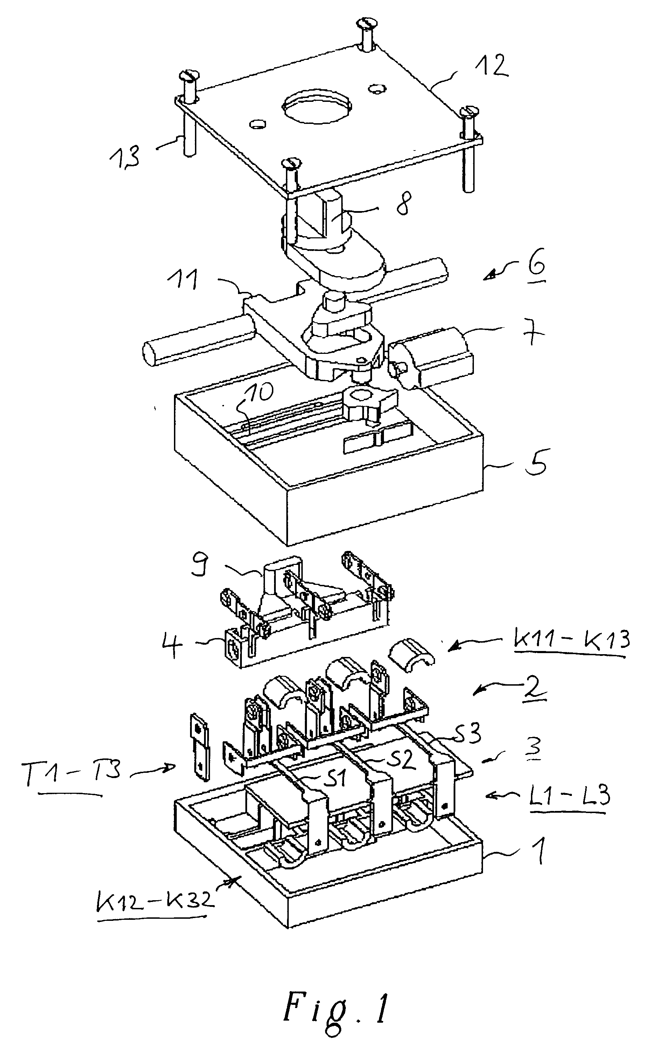

Fig. 1 zeigt eine Explosionsdarstellung eines dreipoligen, insbesondere als Motorschutzschalter verwendbaren elektrischen Schutzschalters.

Der Schutzschalter ist modular in mehreren Ebenen übereinander aufgebaut. Mit 1 ist ein unteres Gehäuseseteil in Form einer flachen, oben offenen Schale bezeichnet. In dieser angeordnet sind einerseits drei mechanische Doppel-Schaltkontakte 2 und zum anderen eine Einheit 3, welche einen Überstromsensor umfasst und zur Erfassung der über die Schaltkontakte 2 und zwischen den Schalteranschlussklemmen L1 - L3 und T1 - T3 fliessenden Ströme, der zwischen diesen vorhandenen Spannungen sowie zur Erzeugung von Steuerspannungen aus diesen Grössen dient. Der untere Gehäuseteil 1 beherbergt auch noch eine in ihrer Längsrichtung verschiebbare Schaltstange 4, welche Teile der Schaltkontakte 2 trägt. Durch Verschiebung der Schaltstange 4 können die Schaltkontakte aus einer mitteleren Offen- oder Nullstellung in zwei beidseits von dieser angeordnete Ein-Schaltstellungen gebracht werden, wobei die beiden Ein-Schaltstellungen z.B. für den Vorwärts- und den Rückwärtslauf eines angeschlossenen Elektromotors verwendet werden können.

In einem weiteren, ebenfalls als oben offene Schale ausgebildeten Gehäuseteil 5 ist ein gesamthaft mit 6 bezeichnetes Schaltschloss angeordnet. Ein mit der Einheit 3 elektrisch gekoppeltes Unterspannungsrelais 7 dient zur Ver- und Entklinkung des Schaltschlosses 6. Das Schaltschloss 6 ist über einen Drehknopf 8 von Hand betätigbar und beaufschlagt bzw. verstellt über die Schaltstange 4 die im unteren Gehäuseteil 2 angeordneten mechanischen Schaltkontakte 2. Hierzu ist die Schaltstange 4 über einen Nocken 9 mit einem Schalthebel 11 des Schaltschlosses 6 in Eingriff. Der Nocken 9 ragt durch eine Öffnung 10 im Boden des Gehäuseteils 5 in den Gehäuseteil 5 hinein. Nach oben abgeschlossen wird der Schutzschalter durch eine Deckplatte 12. Mittels Schrauben 13 ist diese mit dem oberen Gehäuseteil 5 und dieser mit dem unteren Gehäuseteil 1 verschraubbar, wobei alle Teile des Schutzschalters festgelegt werden. Der Schutzschalter ist komplett von oben, d.h. aus nur einer Richtung montierbar.

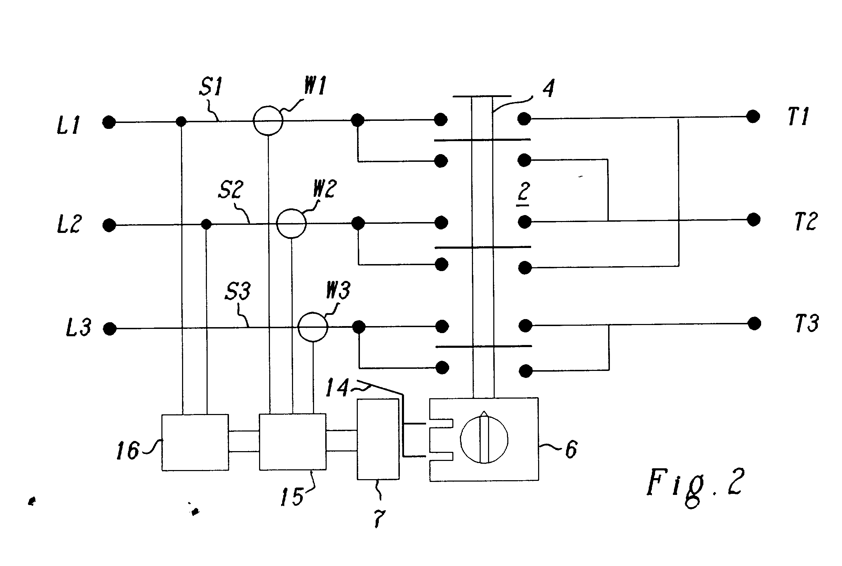

Fig. 2 zeigt den prinzipiellen Aufbau des Schutzschalters von Fig. 1. Man erkennt, wie durch die Schaltkontakte 2 die Eingangsklemmen L1 - L3 des Schutzschalters aus der dargestellen Null- oder Offen-Stellung durch Verschiebung der Schaltstange 4 auf zwei Arten mit den Ausgangsklemmen T1 - T3 verbunden werden können. Die Verschiebung der Schaltstange 4 wird bewirkt durch Betätigung des Schaltschlosses 6 von Hand. Ein Einschalten ist aber nur möglich, wenn und solange der Anker 14 des Unterspannungsrelais 7 im angezogenen Zustand und mit dem Schaltschloss 6 in Eingriff ist und dieses verklinkt, was rein symbolisch dargestellt ist. Bei Abfall des Ankers 14 und Entklinkung des Schaltschlosses 6 in einer der Ein-Schaltstellungen bewirkt das Schaltschloss 6 unter Federwirkung andererseits eine Zurückverschiebung der Schaltstange 4 in Richtung auf ihre Null-Stellung und damit ein Öffnung der Schaltkontakte 2.

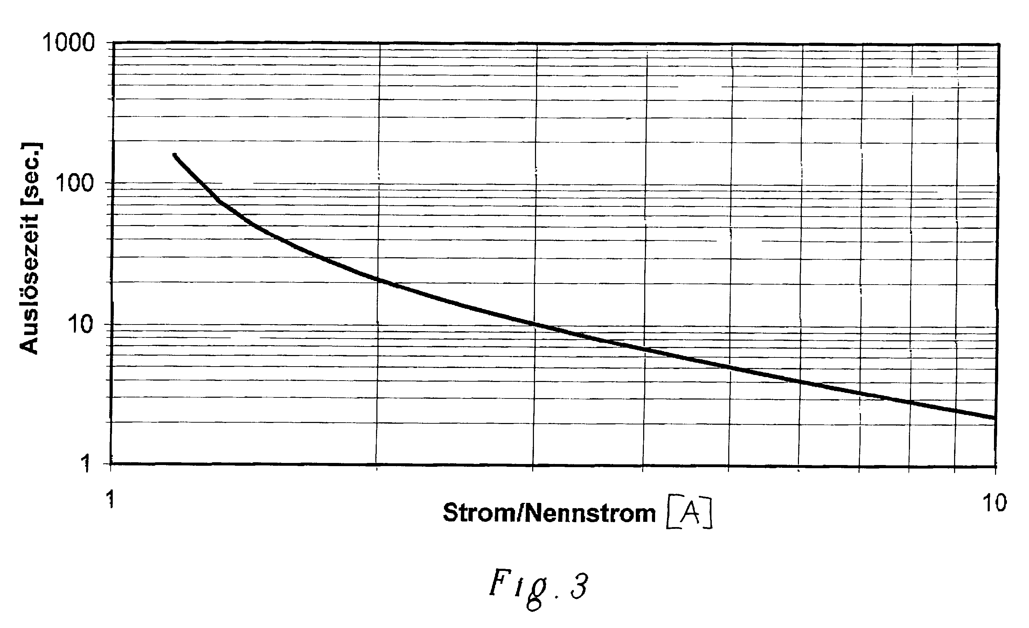

Angesteuert wird das Unterspannungsrelais 7 im Sinne der Erregung seiner Wicklung von einer elektronischen Schaltung 15, die hier als integrierter Schaltkreis (ASIC) ausgeführt und Teil der Einheit 3 ist. Durch die elektronische Schaltung 15 werden die Ströme I1 - I3 in den drei Stromleitern S1 - S3 einzeln ausgewertet und gemäss der in Fig. 3 dargestellten Auslösekurve (Auslösezeit gegen Strom bzw. Nennstrom) die Erregungspannung für das Unterspannungsrelais erzeugt bzw. unterbrochen, wobei letzeres zu einem Abfall des Ankers 14 und zur Entklinkung des Schaltschlosses 6 führt. Die Auslösekurve von Fig. 3 weist eine 1/x-Charakteristik auf, die grundsätzlich in etwa derjenigen der Auslösecharakteristik traditioneller Bimetallelemente entspricht. Erfasst werden die Ströme I1 - I3 in den Stromleitern S1 - S3 mittels Stromwandlern W1 - W3. Die Stromwandler W1 - W3 bilden zusammen mit der elektronischen Schaltung 15 einen Überstromsensor.

Die Versorgungsspannung für die elektronische Schaltung 15 liefert eine Einheit 16, welche an zwei der Stromleiter, hier S1 und S2, angeschlossen ist und einen Spannungswandler sowie eine Gleichrichterschaltung enthält, welche selbst nicht näher dargestellt sind. Beispielsweise erzeugt die Einheit 16 aus der Spannung zwischen den Stromleitern, welche z.B, 400 V beträgt eine Gleichspannung von 5 V. Entfällt die Spannung zwischen den beiden Stromleitern S1 und S2 (Netzzspannung) dann kann auch die Einheit 16 keine Versorgungsspannung an die elektronische Schaltung 15 abgeben und letzere keine Erregungsspannung für das Unterspannungsrelais mehr erzeugen. Auch ein Wegfall der Netzspannung führt somit zum Abfallen des Ankers 14 des Unterspannungsrelais 7 und zu einer Entklinkung des Schaltschlosses. Ohne vorhandene Netzspannung kann der Schalter auch nicht eingeschaltet oder wieder eingeschaltet werden.

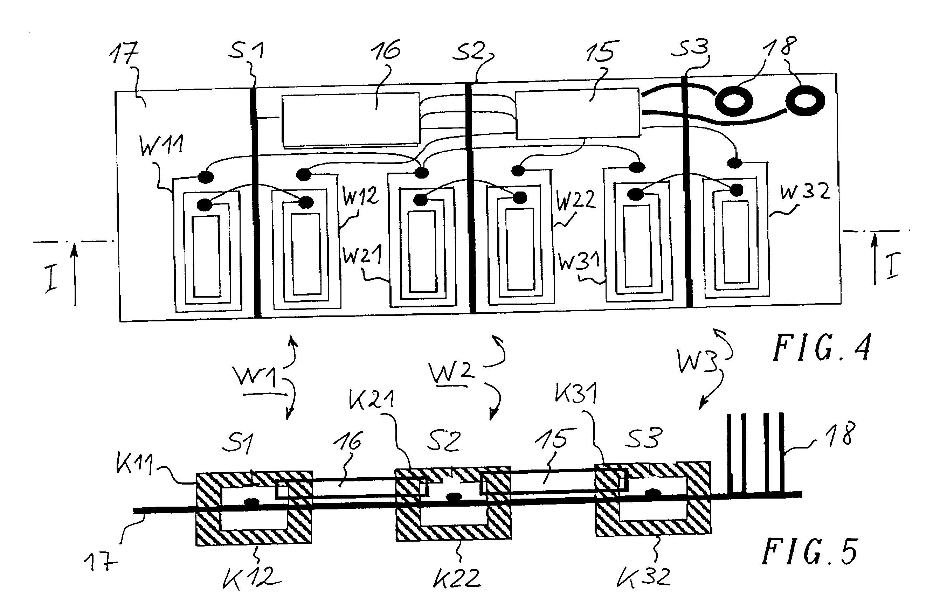

Fig. 4 zeigt in Aufsicht eine Leiterplatte 17, welche als Träger für die elektronische Schaltung (ASIC) 15 sowie die Einheit 16 dient. Auf der Leiterplatte 17 sind weiter Abschnitte der drei Stromleiter S1 - S3 als gerade Leiterbahnen ausgeführt. Beidseits dieser geraden Stromleiter-Leiterbahnen sind, ebenfalls als flache Leiterbahnen, jeweils ein Paar von spiralförmigen Wicklungen bzw. induktiven Schlaufen W11 - W32 zur Ausbildung der Stromwandler W1 - W3 zur Erfassung der in den Stromleitern S1 - S3 fliessenden Ströme angeordnet.

Wie in Fig. 5 zu erkennen ist, die die Leiterpaltte 17 von Fig. 4 im Schnitt zeigt, sind Teil der Stromwandler W1 - W3 auch u-förmig ausgebildete Eisenkernhälften K11 - K32 welche jeweils paarweise beiseits der Leiterplatte 17 angeordnet sind und paarweise quasi geschlossene Eisenkerne bilden. Die spiralförmigen Wicklungen der Stromwandler W1 .- W3 umschliessen jeweils in der Ebene der Leiterplatte 17 die gegeneinander gerichten u-Schenkel der Eisenkernhälften (K11-K32). In Fig. 1 sind die Eisenkernhälften K11 - K32 ebenfalls erkennbar, dort jedoch halbrund gezeichnet.

Mit 18 sind in den Figuren 4 und 5 schliesslich noch Anschlussstife bezeichnet, welche von der Leiterplatte 17 nach oben wegstehen und zur direkten Verbindung der elektronischen Schaltung (ASIC) 15 mit dem im oberen Gehäuseteil 5 angeordneten Unterspannungsrelais 7 dienen.

Was die Ausbildung der elektronischen Schaltung (ASIC) 15 sowie der Einheit 16 zur Erzeugung der Versorgungspannung anbetrifft, so sind diese bevorzugt, wie auch schon erwähnt, möglichst kompakt, insbesondere als integrierte Bauteile ausgeführt, um dadurch insgesamt eine möglichst weitgehende Miniaturisierung der gesamten Schalterkonstruktion zu erreichen. In der elektronischen Schaltung 15 kann die von ihr ausgeführte Schutzfunktion mit Vorteil durch digitale, numerische Berechnung der in Fig. 3 dargestellten Auslösekurve realisiert sein. In diesem Falle lässt sich der Schalter durch geeignete Programmierung der elektronischen Schaltung (z.B. Änderung eines gespeicherten Berechnungsparameters) sehr einfach eichen.

## Patentansprüche

1. Elektrischer Geräteschutzschalter mit Überstrom- und Unterspannungsfunktion umfassend:
- einen mechanischen Schaltkontakt (2) für einen Stromleiter(S1 - S3),
- ein verklinkbares Schaltschloss (6) für den Schaltkontakt (2),
- einen dem Stromleiter (S1 - S3) zugeordneten Überstromsensor (3), und
- ein elektromechanisches Unterspannungs-Relais (7), dessen Erregungsspannung von der Stromleiterspannung abgeleitet ist, dadurch gekennzeichnet, dass
- der Überstromsensor (3) bei Überstrom die Trennung des Unterspannungs-Relais (7) von seiner Erregungsspannung und
- der Abfall des Unterspannungs-Relais (7) die Entklinkung des Schaltschlosses (6) bewirkt.

2. Geräteschutzschalter nach Anspruch 1, dadurch gekennzeichnet, dass der Anker (14) des Unterspannungs-Relais (7) als Klinke für das Schaltschloss (6) ausgebildet ist.

3. Geräteschutzschalter nach Anspruch 1 oder 2, dadurch gekennzeichnet, dass der Stromsensor (3) einen Stromwandler (W1 - W3) sowie eine elektronische Schaltung (15) umfasst, welche anhand des Stromwandlersignals nach einer vorgegebenen Kennlinie die Trennung des Unterspannungs-Relais (7) von seiner Erregungsspannung bewirkt.

4. Geräteschutzschalter nach Anspruch 3, dadurch gekennzeichnet, dass die Versorgungsspannung für die elektronische Schaltung (15) mittels einer Spannungswandler/Gleichrichterschaltung (16) von der Stromleiterspannung abgeleitet ist.

5. Geräteschutzschalter nach Anspruch 3 oder 4, dadurch gekennzeichnet, dass die Erregungsspannung für das Unterspannungs-Relais (7) in der elektronischen Schaltung (15) erzeugt wird.

6. Geräteschutzschalter nach einem der Ansprüche 3 - 5, dadurch gekenzeichnet, dass die elektronische Schaltung (15) als integrierter Schaltkreis (ASIC) ausgeführt ist.

7. Geräteschutzschalter nach einem der Ansprüche 3 - 6, dadurch gekenzeichnet, dass der Stromwandler (W1 - W3) durch ein Paar induktiver Schlaufen(W11 - W32) beidseits eines Abschnittes des Stromleiters (S1 - S3) auf einer Leiterplatte (17) ausgebildet ist und dass zur Ausbildung eines Eisenkerns für den Stromwandler ein Paar von beidseits der Leiterplatte (17) sich gegenüberliegend angeordnete Eisenkernhälften(K11 - K32) vorgesehen sind.

8. Geräteschutzschalter nach Anspruch 7, dadurch gekennzeichnet, dass die Leiterplatte (17) als Träger für den integrierten Schaltkreis (15) verwendet ist.

9. Geräteschutzschalter nach Anspruch 7 oder 8, dadurch gekennnzeichnet, dass die Leiterplatte(17) als Träger für die Spannungswandler-/Gleichrichterschaltung (16) verwendet ist.

10. Geräteschutzschalter nach einem der Ansprüche 1 - 9, dadurch gekennzeichnet, dass das er in einem Gehäuse integriert ist, wobei der Schaltkontakt (2) und der Stromsensor (3) in einer ersten Montageebene und das Schaltschloss (6) und das Unterspannungsrelais (7) in einer zweiten Montageebene angeordnet sind.

11. Geräteschutzschalter nach einer der Ansprüche 1 - 10, dadurch gekennzeichnet, dass das Schaltschloss (6) von Hand über einen Drehhebel (8) bedienbar ist.

12. Übertromsensor (3), insbesondere für einen Geräteschutzschalter nach einem der Ansprüche 1 - 11, dadurch gekennzeichnet, dass er durch die Kombination eines Stromwandlers (W1-W3) mit einer elektronischen Schaltung (15) aufgebaut ist.

13. Überstromsensor nach Anspruch 12, dadurch gekennzeichnet, dass die elektronische Schaltung (15) anhand des Stromwandlersignals nach einer vorgegebenen Kennlinie eine Auslöse... bewirkt.

14. Überstromsensor nach Anspruch 12 oder 13, dadurch gekennzeichnet, dass die elektronische Schaltung (15) als integrierte Schaltung in Form eines ASIC (Application Specific Integrated Circuit) ausgeführt ist.

15. Überstromsensor nach einem der Ansprüche 12 - 14, dadurch gekennzeichnet, dass der Stromwandler (W1 - W3) ein Paar induktiver Schlaufen (W11 - W32) beidseits eines Abschnittes eines Stromleiters (S1 - S3) auf einer Leiterplatte (17) umfasst und dass zur Ausbildung eines Eisenkerns für den Stromwandler ein Paar von beidseits der Leiterplatte (17) sich gegenüberliegend angeordnete Eisenkernhälften (K11 - K32) vorgesehen sind.

16. Überstromsensor nach Anspruch 15, dadurch gekennzeichnet, dass die Leiterplatte (17) als Träger für die elektronische Schaltung (15) verwendet ist.
